# EUROPÄISCHE PATENTSCHRIFT

(11) **EP 1 472 516 B1**
(45) Veröffentlichungstag und Bekanntmachung des Hinweises auf die Patenterteilung: **18.07.2007**
(21) Anmeldenummer: 03737325.5
(22) Anmeldetag: 07.02.2003
(51) Int. Cl.: G01N 3/56, G01N 19/02

(54) **VERFAHREN UND VORRICHTUNG ZUR BESTIMMUNG DER VERSCHLEISSRESISTENZ EINER OBERFL CHE**
METHOD AND DEVICE FOR DETERMINATION OF THE WEAR RESISTANCE OF A SURFACE
PROCEDE ET DISPOSITIF PERMETTANT DE DETERMINER UNE RESISTANCE A L'USURE D'UNE SURFACE

(30) Priorität: 08.02.2002 DE 10205435
(43) Veröffentlichungstag der Anmeldung: 03.11.2004
(73) Patentinhaber: Innowep GmbH, 97070 Würzburg (DE)
(72) Erfinder: WORTMANN, Andreas, 97082 Würzburg (DE); LÜTHJE, Holger, 25469 Halstenbek (DE)
(74) Vertreter: Böck, Bernhard
(86) Internationale Anmeldenummer: PCT/EP2003/001243
(87) Internationale Veröffentlichungsnummer: WO 2003/067222

(56) Entgegenhaltungen:
- US-B1- 6 247 356
- BROESE VAN GROENOU A: "SPHERE-ON-TAPE: A QUICK TEST ON WEAR OF MATERIALS USED IN MAGNETIC RECORDING" WEAR OF MATERIALS 1983, PRESENTED AT THE INTERNATIONAL CONFERENCE.;RESTON, VA, USA, 1983, Seiten 212-217, XP008017198 Wear of Materials, International Conference on Wear of Materials 1983. 1983 ASME, New York, NY, USA
- VAN GROENOU A BROESE ET AL: "QUICK TEST ON WEAR OF HEAD MATERIALS BY RECORDING TAPES" INT MAGN CONF, INTERMAG 83;PHILADELPHIA, PA, USA APR 5-8 1983, Bd. MAG-19, Nr. 5, 5. April 1983 (1983-04-05), Seiten 1674-1676, XP002241641 IEEE Trans Magn Sep 1983
- PATENT ABSTRACTS OF JAPAN vol. 016, no. 197 (P-1350), 12. Mai 1992 (1992-05-12) -& JP 04 029035 A (HITACHI MAXELL LTD), 31. Januar 1992 (1992-01-31)

## Beschreibung

Die vorliegende Erfindung bezieht sich auf ein Verfahren zur Bestimmung der Verschleißresistenz der Oberfläche eines Materials, mit einer Probe, einem Gegenkörper und einem Band, das zwischen der Probe und einem Gegenkörper durchgeführt wird, wobei das Band von dem Gegenkörper mit einer vorbestimmten Kraft gegen die Probe gedrückt wird und die Verschleißresistenz der Oberfläche der Probe bestimmt wird.
Vorrichtung zur Bestimmung der Verschleißresistenz der Oberfläche eines Materials mit einer Probe, einem Gegenkörper und einem Band, eine Halte- und Transportvorrichtung zum Halten und Führen des Bandes über die Probenoberfläche, eine Gegenkörperhalterung und einen durch diese vertikal beweglich gehaltenen Gegenkörper, wobei die Gegenkörperhalterung derart angeordnet ist, dass der Gegenkörper auf die der Probenoberfläche abgewandte Oberfläche des Bandes aufdrückbar ist.

Die Bestimmung der Verschleißfertigkeit von sehr dünnen Oberflächenschichten gewinnt rasch zunehmend an Bedeutung, da in vielen technischen Bereichen erhebliche Miniaturisierungsanstrengungen unternommen werden und sich innovative Technologien, wie z. B. die Mikrosystemtechnik großer Zuwächse erfreut. Mikrotribologische Optimierungen von Führungen, Lagern und Gleitkontakten erfordern beispielsweise die Anwendung extrem dünner Schichten, deren Dicke häufig im Sub-Mikrometerbereich angesiedelt ist, und die hinsichtlich ihrer mechanischen Verschleißfestigkeit messtechnisch überprüft und optimiert werden müssen. Für diese Aufgabenstellung stehen daher zur Zeit keine geeigneten Verfahren zur Verfügung.

Die bekannten, auf AFM-Methoden basierenden Mikro-Scratch-Tester sind für die Ermittlung praktisch verwertbarer und übertragbarer Ergebnisse nicht geeignet, da die Scratch-Ergebnisse, die mit einer feinen Nadel gewonnen werden, keine Aussage über den tatsächlichen, in der Praxis vorliegenden flächenhaften Verschleiß erlauben.

Zur ortsaufgelösten Untersuchung der Verschleißeigenschaften an Materialoberflächen wird u.a. die Kugelverschleißmethode angewendet werden. Dabei werden im 3-Körper-Kontakt kalottenförmige Schliffe auf der zu vermessenden Oberfläche erzeugt, die optisch vermessen Aussagen über die Verschleißfestigkeit ermöglichen. Der Schliff wird durch eine auf der Materialoberfläche gedrehte Kugel erzeugt, die dazu mit einer Schleifsuspension (polishing slurry) benetzt wird.

Nachteilig ist hier, daß das Schleifmittel seine Schleifeigenschaften durch Verunreinigung mit Abriebgut, Einformung der Partikel und durch Verdunstungsverluste des fluiden Anteils verändern kann. Das Schleifmittel kann weiterhin durch Partikeleinlagerung in weichen Oberflächen verschleißpassivierend wirken und ist in der Startphase ungleichmäßig über der Gegenkörper-Kontaktstrecke verteilt. Auch wird die Kugeloberfläche verändert. Ein häufiger Kugeltausch ist erforderlich.

Weiterhin ist bei diesem Verfahren einer Lastvariation durch eine Verkleinerung des Kalottenradius Grenzen gesetzt. Auch kann die Andruckkraft der Kugel nur eingeschränkt reduziert werden. Bei der Auswertung der Meßergebnisse können Kalottenformfehler (besonders Kantenverrundungen) das Meßergebnis verfälschen.

Insgesamt ist festzustellen, daß alle hier genannten Testverfahren nur bedingt auf die jeweilige Anwendung übertragbare Ergebnisse liefern (Scratch-Test) oder sich nicht auf kleine laterale Analyseflächen eingrenzen lassen (Sandriesel-Test).

Beim Reflektionsverfahren zur Testung von Lacken weisen die Ergebnisse große Streuungen auf, während beim Taber-Test keine Analyse extrem dünner Oberflächenbereiche möglich ist.

Eine weitere Testvorrichtung zur Bestimmung der abrasiven Verschleißfestigkeit von Magnetköpfen in Videorekordern ist in Bushan, B. et al. "Tribology and Mechanics" Sp. 22, ASLE Spec. Publ., Park Ridge, 1987 von van Groenou et al. veröffentlicht. Bei diesem sog. "Sphere-on-Tape-Test" wird ein abrasiv wirkendes Band zwischen einer Probenoberfläche und einer lateral fixierten, gewichtsbelasteteten Gegenkörperkugel hindurchgezogen. Durch den Druck der Gegenkörperkugel wird das abrasiv wirkende Band auf die Probe gedrückt, so daß sich durch die Reibung des Bandes auf der Probenoberfläche eine Verschleißkalotte bildet. Zu verschiedenen Zeiten wird nun die Probe aus der Vorrichtung entnommen und die Tiefe der Kalotte ausgemessen.

Bei dieser Vorrichtung führen beispielsweise Banddickenschwankungen oder komplizierte Topographien der Proben zu Dämpfungsproblemen. Weiterhin ist keine genaue Probenpositionskontrolle möglich und durch den Aus- und Einbau der Probe in die Vorrichtung ist eine Automatisierung der Messung nicht durchführbar. Es ist also keine in situ-Verschleißmessung möglich.

Aus dem Konferenzbeitrag (internationale Konferenz on wear of materials 1983) von Broese van Groenou o. a. wurde der Verschleiß von Magnetrekordern untersucht. Hierbei wurde ein durchlaufendes Band mit seiner mit Magnetträgerinformation versehenen Beschichtung gegen eine Probe mit Hilfe eines Gegenkörpers gepresst. Zur Bestimmung des Verschleißes wurde nach Entfernen des Bandes die hierdurch im Probekörper erzeugte Vertiefung ausgemessen und der Verschleiß bestimmt. In nachteiliger Weise erlaubt eine derartige Vorgehensweise nicht eine Insitu-Messung. Da der Verschleiß durch die magnetische Beschichtung erzeugt wird, ist das Material des Bandes selbst ohne jeden Einfluss.

Die US-B1-6247356 zeigt ein Gerät zur Härtemessung von Materialien.

Aufgabe der vorliegenden Erfindung ist es daher, eine Vorrichtung und ein Verfahren zur Bestimmung der mechanischen Verschleißfestigkeit einer Probenoberfläche zur Verfügung zu stellen, mit dem auch die Verschleißresistenz extrem dünner Oberflächenlagen und - beschichtungen zuverlässig, kostengünstig und schnell ermittelt werden kann.

Diese Aufgabe wird durch das Verfahren gemäß Patentanspruch 1 sowie die Vorrichtung nach Anspruch 17 gelöst. Vorteilhafte Weiterbildungen des erfindungsgemäßen Verfahrens und der erfindungsgemäßen Vorrichtung werden in den jeweiligen abhängigen Ansprüchen gegeben.

Erfindungsgemäß unterscheidet sich das vorliegende Verfahren vom Stand der Technik dadurch, daß die Position des Gegenkörpers zu mindestens zwei verschiedenen Zeitpunkten bestimmt wird. Vorteilhaft hieran ist nun, daß nicht unmittelbar die Tiefe der Verschleißkalotte nach Entfernen des Gegenkörpers sondern unmittelbar die Position des Gegenkörpers in situ während des Verschleißtests gemessen wird, so daß dann aus der Position des Gegenkörpers die Verschleißkalotten-Tiefe in dem Probenkörper ermittelt werden kann.

Die Tiefenzunahme ist dabei korreliert mit der Verschleißresistenz der Probenoberfläche. Damit ist eine vereinfachte Messung und Interpretation der Verschleißmessung möglich.

Die eingesetzten Vorrichtungen können in kleiner, mobiler Bauform hergestellt werden, wobei eine Messung sowohl an großen wie an kleinen Objekten möglich ist.

Es sind Messungen von Oberflächenbereichen bis 10 nm Abmessung bzw. lokale Messungen auf Flächen bis herab zu 10 µm² möglich. Damit sind auch Verschleißmessungen in Randbereichen einer Probe möglich. Durch eine geeignete geregelte Belastung des Gegenkörpers sind einheitliche Arbeitsparameter sowie eine Elimination des Einflusses von Verschleißbanddickenschwankungen möglich.

Das erfindungsgemäße Verfahren ist dabei vielfältig einsetzbar. So kann es beispielsweise bei der Qualitätskontrolle und im Forschungs- und Entwicklungsbereich eingesetzt werden, beispielsweise für Lackbeschichtungen, Fußbodenversiegelungen oder zur Qualitätskontrolle von Mikrobauelementen (MEMS) oder der Mikrosystemtechnik. Insbesondere ist eine schnelle Beurteilung von Verschleiß-Hartstoffschichten im Bereich der Beschichtungstechnik (Galvanisieren, Lackieren, generell materialauftragende Beschichtungsverfahren) möglich. Es kann als Optimierungswerkzeug bei der Schichtprozeßentwicklung (z.B. im Bereich der Galvanik, CVD, PVD) eingesetzt werden.

Da die Bestimmung der Position des Gegenkörpers in situ erfolgen kann, kann die Banddickenschwankung aus der Messung eliminiert werden, indem das Band zu den jeweiligen Meßzeitpunkten in dieselbe Bandstellung zurückgeführt wird, so daß die Position des Gegenkörpers immer bei der selben Banddicke bestimmt wird. Dabei kann die Messung der Gegenkörperposition bei stehendem Band an einer Stelle des Bandes erfolgen, die nicht zur Verschleißgenerierung verwandt wurde. Dies hat insbesondere dann eine Bedeutung, wenn Kalotten-Tiefen im Bereich von 10 nm vermessen werden, während die Banddicke gewöhnlich > 10 µm (typischerweise 10-20 µm) und damit das tausendfache der erzeugten Kalotten-Tiefe beträgt. Dies ermöglicht dann auch die Auflösung von Kalotten-Tiefen in der Größenordnung von 1 nm. Als Bänder können herkömmliche Magnetbänder verwendet werden, die es ermöglichen, eine bestimmte Bandposition zu markieren und wiederzuerkennen, so daß das Band für die einzelnen Meßzeitpunkte ohne Druck und Belastung und ggf. auch ohne Kontakt mit dem Gegenkörper und/oder der Probenoberfläche in die markierte Position zurückgefahren werden kann. Selbstverständlich kann auch eine relativ zu der Meßposition des Bandes versetzte Position markiert werden. Die eingesetzten Schleifbänder sind in diesem Falle vorteilhafterweise konventionelle Audio- oder Videobänder mit einer RMS-Rauhigkeit von 10 bis 30 nm. Im Falle magnetischer Bänder kann die Markierung der für die Messung verwendeten Bandposition magnetisch erfolgen und/oder magnetisch erfaßt werden. Als Halte- und Transportvorrichtung für diese Bänder können herkömmliche Bandtransporteinheiten wie VCR- oder MC-Laufwerke verwendet werden, beispielsweise aus mobilen Geräten. Es können jedoch auch speziell angefertigte und/oder beschichtete Bänder aus unterschiedlichen Materialien verwendet werden.

Die Messung der Position des Gegenkörpers kann kapazitiv, induktiv oder auch interferometrisch erfolgen. In letzterem Falle kann der Gegenkörper selbst als Reflektor ausgestaltet werden. Die Kraft die auf den Gegenkörper ausgeübt wird, um das Band gegen die Probenoberfläche zu drücken, kann kapazitiv (AFM), magnetisch oder auch induktiv (Tastverfahren) erzeugt werden. Die Krafteinstellung kann bei diesen Verfahren sehr flexibel geregelt werden, so daß das Dämpfungsverhalten ausregelbar ist und auch bei höheren Bandgeschwindigkeiten Mikro-Kalotten mit außergewöhnlich guter Oberflächenglätte ohne Schliffriefen erzeugt werden. Für die magnetische Krafterzeugung eignen sich beispielsweise Permanent- und/oder Elektromagnete.

Der Gegenkörper kann eine Kugel oder ein Zylinder sein, wobei bei Verwendung einer rollenden Kugel oder eines rollenden Zylinders die Schädigung der Bandrückseite durch den Abrieb zwischen der Kugel und dem Schleifband verringert wird. Auch der Kugelabrieb wird in diesen Fällen verringert. Der Gegenkörper kann auch tribologisch optimiert beschichtet sein, um die Reibung und den Abrieb zwischen dem Gegenkörper und dem Schleifband zu verringern.

Weitere vorteilhafte Beschichtungen betreffen die Einstellung der Nano/Mikrotopographie der Schleifbandoberfläche, die mit der Probenoberfläche in Kontakt kommt, beispielsweise durch Plasma- oder Ionenätzen. Das Schleifband kann auf der abrasiven Seite auch adhäsiv beschichtet sein, z.B. durch CVD-oder PVD-Verfahren wie Aufdampfen oder Sputtern, um auch einen adhäsiven Abrieb erfassen zu können.

Zur Auswertung der Messung kann beispielsweise ein Tiefenkriterium herangezogen werden. In diesem Falle erfolgt der abrasive Bandlauf bis ein bestimmtes Tiefenkriterium für die erzeugte Kalotte in der Probenoberfläche erreicht ist. Die Überwachung des Tiefenkriteriums kann durch Messung der Position des Gegenkörpers in bestimmten Zeitabständen oder kontinuierlich erfolgen. Ist das Tiefenkriterium erreicht, so kann die hierzu erforderliche Zeitdauer oder die Länge des zwischen dem Gegenkörper und der Probe durchgezogenen Bandes, das diese Kalotte erzeugt hat, bestimmt werden. Die Zeitdauer oder die Bandlänge korrelieren nun mit der Verschleißfestigkeit der Probenoberfläche.

Im folgenden soll ein Beispiel einer erfindungsgemäßen Vorrichtung und eines erfindungsgemäßen Verfahrens beschrieben werden.

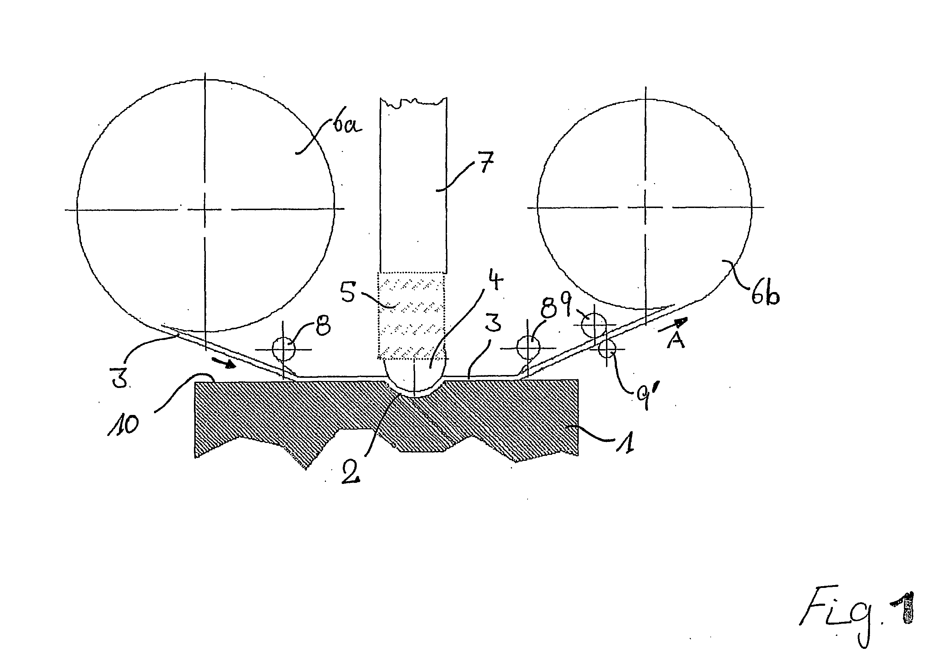

Die einzige Fig. 1 zeigt eine Vorrichtung zur Vermessung der Verschleißfestigkeit eines Probenkörpers 1. Der Probenkörper 1 besitzt eine Oberfläche 10, auf die ein als Halbkugel ausgebildeter Gegenkörper 4 aufgedrückt wird. Zwischen dem Gegenkörper 4 und der Oberfläche 10 des Probenkörpers 1 wird ein abrasiv wirkendes Band 3 geführt. Dieses Band 3 wird von einer Spule 6a abgewickelt und auf eine Spule 6b aufgewickelt, wobei es mittels Transportrollen 9, 9' transportiert und mittels Niederhalter 8 parallel zu der Oberfläche 10 des Probenkörpers 1 geführt wird. Eine derartige Rollenführung 6a, 6b, 8, 9, 9' findet sich beispielsweise in konventionellen portablen Audio- oder Videobandgeräten.

Die Halbkugel 4 wird nun durch eine Halterung 5 bezüglich Bewegungen in der Ebene der Oberfläche 10 fixiert, wobei die Halterung 5 jedoch eine zur Oberfläche 10 vertikale Bewegung der Halbkugel 4 ermöglicht. Die Halbkugel 4 ist weiterhin mit einer Einheit 7 verbunden, die zum einen eine Last auf die Halbkugel 4 ausübt und zum anderen eine Meßvorrichtung zur Bestimmung der vertikalen Position der Halbkugel 4 enthält.

Mittels der Einheit 7 wird nun die Halbkugel 4 mit einer definierten Kraft auf das Magnetband 3 gedrückt, so daß dieses während des Bandlaufes mit der Oberfläche 10 des Probenkörpers 1 in Reibungskontakt steht und in der Oberfläche 10 des Probenkörpers 1 eine Verschleiß- bzw. Abriebskalotte 2 erzeugt. Bei Fig. 1 ist die Tiefe der Abriebskalotte 2 verglichen mit der Dicke des Bandes 3 vollkommen überzogen dargestellt, da gewöhnlich die Dicke des Bandes das ca. tausendfache der zu erzeugenden Kalotte (mit einer Tiefe bis herab zu 1 nm) entspricht.

Die Meßvorrichtung 7 enthält hierbei beispielsweise ein Interferometer, das einen Lichtstrahl auf die plane dem Schleifband abgewandte Oberfläche der Halbkugel 4 aussendet, der von dieser Oberfläche reflektiert und in dem Interferrometer 7 vermessen wird. Aus dieser Messung läßt sich dann die Position der Halbkugel 4 und bei zeitlich beabstandeten Messungen auch die Tiefe bzw. die Tiefenänderung der Kalotte 2 bestimmen.

## Patentansprüche

1. Verfahren zur Bestimmung der Verschleißresistenz der Oberfläche eines Materials, mit einer Probe (1), einem Gegenkörper (4) und einem Band (3), das zwischen der Probe (1) und einem Gegenkörper (4) durchgeführt wird, wobei das Band (3) von dem Gegenkörper (4) mit einer vorbestimmten Kraft gegen die Probe (1) gedrückt wird und die Verschleißresistenz der Oberfläche der Probe (1) bestimmt wird, **dadurch gekennzeichnet, dass** das Band ein abrasiv wirkendes Schleifband ist,
gleichzeitig bei der Durchführung des Bandes die Position des Gegenkörpers (4) zu mindestens zwei verschiedenen Zeitpunkten bestimmt wird und
sich aus der Differenz der bestimmten Positionen die Verschleißresistenz ergibt.

2. Verfahren nach dem vorhergehenden Anspruch, **dadurch gekennzeichnet, daß** zur Bestimmung der Position des Gegenkörpers (4) zu den mindestens zwei verschiedenen Zeitpunkten das Schleifband (3) jeweils in dieselbe Bandstellung geführt wird.

3. Verfahren nach einem der vorhergehenden Ansprüche, **dadurch gekennzeichnet, daß** zur Bestimmung der Position des Gegenkörpers (4) das Schleifband (3) jeweils ohne Druck durch den Gegenkörper (4) gegen die Probe (1) und/oder ohne Kontakt mit dem Gegenkörper in dieselbe Bandstellung geführt wird.

4. Verfahren nach einem der vorhergehenden Ansprüche, **dadurch gekennzeichnet, daß** die Stelle des Schleifbandes (3), in der die Bestimmung der Position des Gegenkörpers (4) erfolgt, oder eine hierzu korrespondierende Stelle markiert wird.

5. Verfahren nach dem vorhergehenden Anspruch, **dadurch gekennzeichnet, daß** das Schleifband magnetisch markiert wird.

6. Verfahren nach einem der beiden vorhergehenden Ansprüche, **dadurch gekennzeichnet, daß** zur Bestimmung der Position des Gegenkörpers (4) jeweils die markierte Stelle des Schleifbandes (3) aufgesucht und das Schleifband (3) entsprechend eingestellt wird.

7. Verfahren nach einem der vorhergehenden Ansprüche, **dadurch gekennzeichnet, daß** die Position des Gegenkörpers (4) kontinuierlich bestimmt wird.

8. Verfahren nach einem der vorhergehenden Ansprüche, **dadurch gekennzeichnet, daß** der Gegenkörper (4) senkrecht zur Oberfläche des Schleifbandes (3) bewegt wird.

9. Verfahren nach einem der vorhergehenden Ansprüche, **dadurch gekennzeichnet, daß** der Gegenkörper (4) bezüglich Bewegungen in der Ebene der Bandoberfläche fixiert wird.

10. Verfahren nach einem der vorhergehenden Ansprüche, **dadurch gekennzeichnet, daß** die Position des Gegenkörpers (4) kapazitiv, induktiv und/oder optisch interferometrisch bestimmt wird.

11. Verfahren nach einem der vorhergehenden Ansprüche, **dadurch gekennzeichnet, daß** als Gegenkörper (4) eine Kugel oder ein Zylinder verwendet wird.

12. Verfahren nach einem der vorhergehenden Ansprüche, **dadurch gekennzeichnet, daß** der Gegenkörper (4) durch seine Eigenmasse und/oder durch ein Krafterzeugungssystem (7) auf das Band gedrückt wird.

13. Verfahren nach einem der vorhergehenden Ansprüche, **dadurch gekennzeichnet, daß** der Gegenkörper (4) durch ein kapazitives, magnetisches oder induktives Krafterzeugungssytem (7) und/oder durch mechanisch untersetzte Kompensationssysteme, wie beispielsweise eine Wippe, auf das Band gedrückt wird.

14. Verfahren nach einem der vorhergehenden Ansprüche, **dadurch gekennzeichnet, daß** ein tribologisch optimierter und/oder beschichteter Gegenkörper (4) verwendet wird.

15. Verfahren nach einem der vorhergehenden Ansprüche, **dadurch gekennzeichnet, daß** ein tribologisch optimiert beschichteter Gegenkörper (4) verwendet wird, um die Reibung und den Abrieb zwischen Gegenkörper (4) und Schleifband (3) zu verringern.

16. Verfahren nach einem der vorhergehenden Ansprüche, **dadurch gekennzeichnet, daß** die Zeitdauer oder die Länge des zwischen dem Gegenkörper (4) und der Probe (1) durchgezogenen Bandes bestimmt wird, die erforderlich ist, um einen bestimmten Abrieb zu erzeugen.

17. Vorrichtung zur Bestimmung der Verschleißresistenz der Oberfläche eines Materials mit einer Probe (1), einem Gegenkörper (4) und einem Band (3), eine Halte- und Transportvorrichtung (6a, 6b) zum Halten und Führen des Bandes (3) über die Probenoberfläche, eine Gegenkörperhalterung (5) und einen durch diese vertikal beweglich gehaltenen Gegenkörper (4), wobei die Gegenkörperhalterung (5) derart angeordnet ist, dass der Gegenkörper (4) auf die der Probenoberfläche abgewandte Oberfläche des Bandes (3) aufdrückbar ist, **dadurch gekennzeichnet, dass**
eine Messvorrichtung (7) zur Bestimmung der Position des Gegenkörpers vorhanden (4) und
das Band (3) ein abrasiv wirkendes Schleifband ist.

18. Vorrichtung nach dem vorhergehenden Anspruch, **dadurch gekennzeichnet, daß** mit der Meßvorrichtung (7) die Position des Gegenkörpers (4) zu mindestens zwei verschiedenen Zeitpunkten oder kontinuierlich bestimmbar ist.

19. Vorrichtung nach einem der beiden vorhergehenden Ansprüche **gekennzeichnet durch** eine Steuervorrichtung zur Führung des Schleifbandes (3) in eine vorbestimmte Bandposition zur Bestimmung der Position des Gegenkörpers (4).

20. Vorrichtung nach dem vorhergehenden Anspruch, **gekennzeichnet durch** eine Vorrichtung zur Markierung des Schleifbandes (3) in einer vorbestimmten Position sowie eine Vorrichtung zur Erkennung der Markierung.

21. Vorrichtung nach einem der Ansprüche 17 bis 20, **dadurch gekennzeichnet, daß** der Gegenkörper (4) senkrecht zur Oberfläche des Schleifbandes (3) bewegbar ist.

22. Vorrichtung nach einem der Ansprüche 17 bis 21, **dadurch gekennzeichnet, daß** der Gegenkörper (4) bezüglich Bewegungen in der Ebene der Bandoberfläche fixiert ist.

23. Vorrichtung nach einem der Ansprüche 17 bis 22, **dadurch gekennzeichnet, daß** die Meßvorrichtung (7) für die Position des Gegenkörpers (4) eine kapazitive, induktive oder optisch interferometrische Meßvorrichtung ist.

24. Vorrichtung nach einem der Ansprüche 17 bis 23, **dadurch gekennzeichnet, daß** der Gegenkörper (4) eine Kugel oder ein Zylinder ist.

25. Vorrichtung nach einem der Ansprüche 17 bis 24, **gekennzeichnet durch** ein Krafterzeugungssystem (7) zum Aufpressen des Gegenkörpers (4) auf das Schleifband (3).

26. Vorrichtung nach einem der Ansprüche 17 bis 25, **gekennzeichnet durch** ein kapazitives, magnetisches oder induktives Krafterzeugungssytem (7) und/oder **durch** ein mechanisch untersetztes Kompensationssystem, wie beispielsweise eine Wippe.

27. Vorrichtung nach einem der Ansprüche 17 bis 26, **dadurch gekennzeichnet, daß** der Gegenkörper (4) beschichtet ist.

28. Vorrichtung nach dem vorhergehenden Anspruch, **dadurch gekennzeichnet, daß** der Gegenkörper (4) tribologisch optimiert beschichtet ist, um die Reibung und den Abrieb zwischen Gegenkörper (4) und Schleifband (3) zu verringern.

## Claims

1. Method for determining the wear resistance of a material surface, with a sample (1), a counter-body (4) and a belt (3) which is run through between the sample (1) and a counter-body (4), wherein the belt (3) is pressed by the counter-body (4) with a previously determined force against the sample (1) and the wear resistance of the sample (1) surface is determined,
**characterized in that**
the belt is an abrasive grinding belt,
simultaneously to the running through of the belt, the position of the counter-body (4) is determined at at least two different points in time and
the wear resistance results from the difference of the positions determined.

2. Method in accordance with the preceding claim,
**characterized in that**
for determining the position of the counter-body (4) at the at least two different points in time the grinding belt (3) is run back into the same belt position each time.

3. Method in accordance with one of the preceding claims,
**characterized in that**
for determining the position of the counter-body (4) the grinding belt (3) is run back into the same belt position each time without pressure by the counter-body (4) against the sample (1) and/or without contact to the counter-body.

4. Method in accordance with one of the preceding claims,
**characterized in that**
the location of the grinding belt (3) at which the position of the counter-body (4) is determined, or a location corresponding thereto are marked.

5. Method in accordance with the preceding claim,
**characterized in that**
the grinding belt is magnetically marked.

6. Method in accordance with the two preceding claims,
**characterized in that**
for determining the position of the counter-body (4) in each case the marked location of the grinding belt (3) is traced and the grinding belt (3) is adjusted accordingly.

7. Method in accordance with one of the preceding claims,
**characterized in that**
the position of the counter-body (4) is determined continuously.

8. Method in accordance with one of the preceding claims,
**characterized in that**
the counter-body (4) is moved vertically to the surface of the grinding belt (3).

9. Method in accordance with one of the preceding claims,
**characterized in that**
the counter-body (4) is fixed in relation to movements in the plane of the belt surface.

10. Method in accordance with one of the preceding claims,
**characterized in that**
the position of the counter-body (4) is determined capacitatively, inductively and/or optically interferometrically.

11. Method in accordance with one of the preceding claims,
**characterized in that**
a ball or a cylinder is used as the counter-body (4).

12. Method in accordance with one of the preceding claims,
**characterized in that**
the counter-body (4) is pressed on the belt by its own mass and/or by a force generating system (7).

13. Method in accordance with one of the preceding claims,
**characterized in that**
the counter-body (4) is pressed on the belt by a capacitative, magnetic or inductive force generating system (7) and/or by mechanical compensation systems such as a seesaw, for example.

14. Method in accordance with one of the preceding claims,
**characterized in that**
a tribologically optimized and/or coated counter-body (4) is used.

15. Method in accordance with one of the preceding claims,
**characterized in that**
a tribologically optimized coated counter-body (4) is used for reducing friction and the wear between the counter-body (4) and the grinding belt (3).

16. Method in accordance with one of the preceding claims,
**characterized in that**
the period of time or the length of the belt running through between the counter-body (4) and the sample (1), which is required for producing a certain grade of wear, is determined.

17. Device for determining the wear resistance of a material surface with a sample (1), a counter-body (4) and a belt (3), a holding and transport device (6a, 6b) which holds and guides the belt (3) over the sample surface, a counter-body holding (5) and a counter-body (4) which is held by the counter-body holding so as to be vertically movable, wherein the counter-body holding (5) is arranged in a way that the counter-body (4) can be pressed on the belt (3) surface which is turned away from the sample surface,
**characterized in that**
a measuring device (7) for determining the position of the counter-body (4) is present and the belt (3) is an abrasive grinding belt.

18. Device in accordance with the preceding claim,
**characterized in that**
the position of the counter-body (4) can be determined by the measuring device (7) at at least two points in time or continuously.

19. Device in accordance with one of the two preceding claims,
**characterized by**
a steering mechanism for guiding the grinding belt (3) into a previously determined belt position for determining the position of the counter-body (4).

20. Device in accordance with the preceding claim,
**characterized by**
a device for marking the grinding belt (3) in a previously determined position as well as a device for recognizing this marking.

21. Device in accordance with one of claims 17 to 20,
**characterized in that**
the counter-body (4) is movable vertically to the surface of the grinding belt (3).

22. Device in accordance with one of claims 17 to 21,
**characterized in that**
the counter-body (4) is fixed in relation to movements in the plane of the belt surface.

23. Device in accordance with one of claims 17 to 22,
**characterized in that**
the measuring device (7) for the position of the counter-body (4) is a capacitative, inductive or optically interferometrical measuring device.

24. Device in accordance with one of claims 17 to 23,
**characterized in that**
the counter-body (4) is a ball or a cylinder.

25. Device in accordance with one of claims 17 to 24,
**characterized by**
a force generating system (7) for pressing the counter-body (4) on the grinding belt (3).

26. Device in accordance with one of claims 17 to 25,
**characterized by** a capacitative, magnetical or inductive force generating system (7) and/or by a mechanical compensation system such as a seesaw, for example.

27. Device in accordance with one of claims 17 to 26,
**characterized in that**
the counter-body (4) is coated.

28. Device in accordance with the preceding claim,
**characterized in that**
the counter-body (4) is coated in a tribologically optimized fashion so as to reduce the friction and the wear between the counter-body (4) and the grinding belt (3).

## Revendications

1. - Procédé pour déterminer la résistance à l'usure de la surface d'un matériau, au moyen d'une éprouvette (1), un corps antagoniste (4) et une bande (3) qui est entraînée entre l'éprouvette (1) et un corps antagoniste (4), dans lequel la bande (3) est pressée par le corps antagoniste (4) contre l'éprouvette (1) avec une force prédéterminée et la résistance à l'usure de la surface de l'éprouvette (1) est déterminée, **caractérisé en ce que** la bande est une bande de frottement ayant une action abrasive, qu'en même temps, lors de l'entraînement de la bande, la position du corps antagoniste (4) est définie au moins à deux instants différents et, que la résistance à l'usure est obtenue à partir de la différence des positions déterminées.

2. - Procédé selon la revendication précédente, **caractérisé en ce que** pour la détermination de la position du corps antagoniste (4) auxdits au moins deux instants différents la bande de frottement (3) est entraînée chaque fois dans les mêmes positions de la bande.

3. - Procédé selon l'une des revendications précédentes, **caractérisé en** de que pour la détermination de la position du corps antagoniste (4) la bande de frottement (3), est entraînée chaque fois sans pression par le corps antagoniste (4) contre l'éprouvette (1) et/ou sans contact avec le corps antagoniste dans les mêmes positions de la bande.

4. - Procédé selon l'une des revendications précédentes, **caractérisé en ce que** la position de la bande de frottement (3) dans laquelle est déterminée la position du corps antagoniste (4) ou une position correspondant à celle-ci est marquée.

5. - Procédé selon l'une des revendications précédentes, **caractérisé en ce que** la bande de frottement est marquée magnétiquement.

6. - Procédé selon l'une des deux revendications précédentes, **caractérisé en ce que** pour la détermination de la position du corps antagoniste (4) chaque fois la position marquée de la bande de frottement (3) est recherchée et la bande de frottement (3) est réglée de façon correspondante.

7. - Procédé selon l'une des revendications précédentes, **caractérisé en ce que** la position du corps antagoniste (4) est déterminée en continu.

8. - Procédé selon l'une des revendications précédentes, **caractérisé en ce que** le corps antagoniste (4) est déplacé perpendiculairement à la surface de la bande de frottement (3).

9. - Procédé selon l'une des revendications précédentes, **caractérisé en ce que** le corps antagoniste (4) est fixé par rapport à des mouvements dans le plan de la surface de la bande.

10. - Procédé selon l'une des revendications précédentes, **caractérisé en ce que** la position du corps antagoniste (4) est déterminée par détection capacitive, inductive et/ou par interférométrie optique.

11. **-** Procédé selon l'une des revendications précédentes, **caractérisé en ce qu'**une sphère ou un cylindre est utilisé en tant que corps antagoniste (4).

12. - Procédé selon l'une des revendications précédentes, **caractérisé en ce que** le corps antagoniste (4) est pressé sur la bande par son propre poids et/ou par un système de génération de force (7).

13. - Procédé selon l'une des revendications précédentes, **caractérisé en ce que** le corps antagoniste (4) est pressé sur la bande au moyen d'un système de génération de force (7) capacitif, magnétique ou inductif et/ou au moyen d'un système inséré mécanique de compensation, comme par exemple une bascule.

14. - Procédé selon l'une des revendications précédentes, **caractérisé en ce qu'**on utilise un corps antagoniste (4) optimisé sur le plan tribologique et/ou revêtu.

15. - Procédé selon l'une des revendications précédentes, **caractérisé en ce qu'**on utilise un corps antagoniste (4) optimisé sur le plan tribologique et/ou revêtu, pour réduire le frottement et l'abrasion entre le corps antagoniste (4) et la bande de frottement (3).

16. - Procédé selon l'une des revendications précédentes, **caractérisé en ce que** la durée ou la longueur de la bande entraînée entre le corps antagoniste (4) et l'éprouvette (1) nécessaire pour obtenir une abrasion déterminée, est déterminée.

17. - Dispositif pour déterminer la résistance à l'usure de la surface d'un matériau, comportant une éprouvette (1), un corps antagoniste (4) et une bande (3), un dispositif de maintien et de transport (6a, 6b) pour maintenir et entraîner la bande (3) sur la surface d'une éprouvette, un support (5) pour un corps antagoniste et un corps antagoniste (4) déplaçable verticalement maintenu par ce support, dans lequel le support (5) du corps antagoniste est agencé de telle sorte que le corps antagoniste (4) peut être pressé sur la surface de la bande (3) adjacente à la surface de l'éprouvette, **caractérisé en ce qu'**il comprend un dispositif de mesure (7) pour déterminer la position du corps antagoniste (4) et la bande (3) est une bande de frottement à action abrasive.

18. - Dispositif selon la revendication précédente, **caractérisé en ce qu'**au moyen du dispositif de mesure (7) on peut déterminer la position du corps antagoniste (4) au moins en deux instants différents ou de façon continue.

19. - Dispositif selon l'une des deux revendications précédentes, **caractérisé par** un dispositif de commande pour entraîner la bande frottement (3) dans une position prédéterminée pour déterminer la position du corps antagoniste (4).

20. - Dispositif selon la revendication précédente, **caractérisé par** un dispositif pour marquer la bande de frottement (3) dans une position prédéterminée ainsi qu'un dispositif pour identifier le marquage.

21. - Dispositif selon l'une des revendications 17 à 20, **caractérisé en ce que** le corps antagoniste (4) est mobile perpendiculairement à la surface de la bande de frottement (3).

22. - Dispositif selon l'une des revendications 17 à 21, **caractérisé en ce que** le corps antagoniste (4) est fixé par rapport à des mouvements dans le plan de la surface de la bande.

23. - Dispositif selon l'une des revendications 17 à 22, **caractérisé en ce que** le dispositif de mesure (7) pour la position du corps antagoniste (4) est un dispositif de mesure capacitif, inductif ou par interférométrie optique.

24. - Dispositif selon l'une des revendications 17 à 23, **caractérisé en ce que** le corps antagoniste (4) est une sphère ou un cylindre.

25. - Dispositif selon l'une des revendications 17 à 24, **caractérisé par** un système de génération de force (7) pour presser le corps antagoniste (4) sur la bande de frottement (3).

26. - Dispositif selon l'une des revendications 17 à 25, **caractérisé par** un système de génération de force (7) capacitif, magnétique ou inductif et/ou par un système inséré mécanique de compensation, comme par exemple une bascule.

27. - Dispositif selon l'une des revendications 17 à 26, **caractérisé en ce que** le corps antagoniste (4) est revêtu.

28. - Dispositif selon la revendication précédente, **caractérisé en ce que** le corps antagoniste (4) est revêtu pour être tribologiquement optimisé pour réduire le frottement et l'abrasion entre le corps antagoniste (4) et la bande de frottement (3).
